# EUROPÄISCHE PATENTSCHRIFT

(11) **EP 3 086 428 B1**
(45) Veröffentlichungstag und Bekanntmachung des Hinweises auf die Patenterteilung: **26.02.2020**
(21) Anmeldenummer: 15164857.3
(22) Anmeldetag: 23.04.2015
(51) Int. Cl.: H02H 7/22, H02H 11/00

(54) **VERFAHREN UND ANORDNUNG ZUR PARAMETRIERUNG VON FELDLEITGERÄTEN UND/ODER SCHUTZGERÄTEN EINER SCHALTANORDNUNG**
METHOD AND ASSEMBLY FOR PARAMETERIZING FIELD CONTROL DEVICES AND/OR PROTECTION DEVICES OF A CIRCUIT ASSEMBLY
PROCÉDÉ ET SYSTÈME DE PARAMÉTRAGE D'APPAREILS DE COMMANDE SUR SITE ET/OU D'APPAREILS DE PROTECTION D'UN SYSTÈME DE COMMUTATION

(43) Veröffentlichungstag der Anmeldung: 26.10.2016
(73) Patentinhaber: Siemens Aktiengesellschaft, 80333 München (DE)
(72) Erfinder: Chochole, Michael, 1230 Wien (AT); Kramer, Dieter, 01279 Dresden (DE); Möller, Jan, 13629 Berlin (DE); Wache, Markus, 90584 Allersberg (DE)

(56) Entgegenhaltungen:
- DE-A1- 3 812 072
- US-A- 6 137 776
- US-A1- 2010 204 948

## Beschreibung

Die Erfindung betrifft ein Verfahren zur Parametrierung von Verriegelungsbedingungen für Feldleitgeräte und/oder Schutzgeräte einer Schaltanordnung gemäß Anspruch 1 sowie eine entsprechende Anordnung gemäß Anspruch 10.

In elektrischen Schaltanlagen spielt der Schaltfehlerschutz eine große Rolle. Dieser Schutz stellt sicher, dass Schaltgeräte nur dann geschaltet werden, wenn dies auch zulässig ist. Insbesondere soll vermieden werden, dass ein Trennschalter unter Last geschaltet wird, dass asynchrone Netzteile gekoppelt werden, dass auf geerdete Betriebsmittel geschaltet wird oder dass unter Spannung stehende Betriebsmittel geerdet werden. Dies bedeutet beispielsweise, dass ein geschlossener Schalter in einem Teil eines elektrischen Energieversorgungsnetzes ein Zuschalten eines Trennschalters in einem anderen Teil des elektrischen Energieversorgungsnetzes verhindert, was "Verriegelung" genannt wird. Die Abhängigkeit der Entscheidung einer Schaltfreigabe oder einer Verriegelung eines bestimmten Schaltgeräts vom Schaltzustand anderer Schaltgeräte ergibt sich aus der Topologie des Energieversorgungsnetzes. Im Rahmen dieser Patentanmeldung umfasst der Begriff Verriegelungsbedingungen auch Freigabebedingungen.

Es soll durch den Schaltfehlerschutz verhindert werden, dass wegen fehlerhafter bzw. ungewollter Schalthandlungen Personen oder technische Ausrüstung zu Schaden kommen. Unterschieden wird dabei in sicherheitsrelevante Entscheidungen, die eine Gefahr für Menschen und Betriebsmittel vermeiden, und betriebsrelevante Entscheidungen, die im Wesentlichen die Betriebsphilosophie einer Anlage wiederspiegeln und die sicherheitsrelevanten Schaltfreigaben einschränken. Es kann beispielsweise eine Betriebsphilosophie sein, dass aus Gründen der Übersichtlichkeit die Schaltreihenfolge derart eingehalten wird, dass ein Leistungsschalters erst geschlossen wird, wenn die entsprechenden Trennschalter geschlossen sind. Weitere Beispiele für im Rahmen einer Betriebsphilosophie zu beachtenden Aspekten sind das Zuschalten einer oder der Transfer eines Abgangs auf eine zusätzliche Hilfssammelschiene, das Koppeln von Sammelschienen, die Sicherstellung einer kontinuierlichen Stromversorgung und die Einhaltung der Kurzschlussfestigkeitsgrenzen der verwendeten Leistungsschalter.

Im Stand der Technik ist es bisher üblich, die Entscheidungen der Schaltfreigabe oder Verriegelung mit Hilfe von booleschen Gleichungen zu treffen. Diese Gleichungen müssen für jede Anlage individuell konfiguriert werden, was bei größeren Anlagen sehr komplex und unübersichtlich ist. Dies erhöht die Gefahr fehlerhafter oder unvollständiger Ausdrücke und Gleichungen und damit verbundener Sicherheitsrisiken.

Aus diesem Grund wurden im Stand der Technik Ansätze für eine automatische Auswertung der Verschaltung von Schaltgeräten, also der Topologie einer elektrischen Schaltanlage, entwickelt. Mithilfe der Topologie wird es möglich, die Erstellung von Verriegelungsbedingungen für die Schaltgeräte zumindest teilweise zu automatisieren und so den Konfigurationsaufwand bei der Parametrierung der Schaltgeräte zu verringern. Dabei wurde i.d.R. eine einzelne Schaltanordnung mit mehreren Feldern betrachtet.

Die Verriegelung von Schalthandlungen anhand topologischer Informationen wird in der Dissertation "Ein universelles Verriegelungsverfahren auf topologischer Basis" von Heinrich Hoppe-Oehl, eingereicht 1991 an der Technischen Universität des Saarlandes, behandelt. Dabei wird beispielsweise mittels einer zentralen Verriegelungsvorrichtung eine Auswertung von vorgegebenen Verriegelungsbedingungen vorgenommen. Eine Topologie wird anhand einer Bilderkennung aus einem einpoligen Übersichtsbild erkannt (Seiten 36,37), wobei Verschaltungsmuster anhand einer Mustererkennung mittels vorgegebener Muster erkannt und berücksichtigt werden (Seiten 77-79,88).

Weiterhin beschäftigt sich die Dissertation von Steffen Berthold an der TU Dresden (1992) "Der integrierte Schaltfehlerschutz sowie neue Verfahren zur Projektierung und Abarbeitung von Schaltverriegelung" mit der der Verriegelung von Schalthandlungen anhand topologischer Informationen. Um betriebsbedingte Verriegelungsbedingungen für Schaltanlagen zu erreichen, sind zusätzliche Aufwände zu unternehmen. Es wird erwähnt, dass es sich dabei um eine Mustererkennung handelt, die für die Verriegelung ausgewertet werden soll. Diese Muster müssen aber im Vorfeld definiert werden.

Ferner ist aus der Patentschrift DE3812072 C3 die Möglichkeit bekannt, die Topologie der Verschaltung von Schaltgeräten einer Schaltanlage auszuwerten. Eine betriebsbedingte Verriegelung kann erreicht werden, indem die sicherheitsrelevanten Verriegelungsbedingungen mit booleschen Gleichungen erweitert werden. Dabei wird davon ausgegangen, dass die betriebsbedingten und die sicherheitsrelevanten Verriegelungsbedingungen bei der Projektierung einer Anlage zentral ermittelt und in die einzelnen Schaltgeräte übertragen werden.

Weiterhin ist die IEEE Veröffentlichung "Topology-Based Interlocking of Electrical Substations" von J. Kopainsky, W. Wimmer und K.P. Brand, erschienen in "IEEE Transactions on Power Delivery", Juli 1986, S. 118-126, bekannt. Darin wird eine auf einer Topologie einer Schaltanordnung basierendes Verfahren behandelt. Sowohl sicherheitsrelevante als auch betriebsbedingte Verriegelungsbedingungen basieren auf einer Mustererkennung für Komponenten einer Topologie, also beispielsweise für einen Schaltungszweig.

Des Weiteren ist es aus der Produktbeschreibung "DIGSI 5, Software-Beschreibung", Kennnummer C53000-D5000-C001-5, Ausgabe 10.2013 der Siemens AG bekannt, mittels einer Software eine vereinfachte Projektierung und Bedienung für alle SIPROTEC 5 Schutzgeräte vorzunehmen. Es können Topologien von Schaltanlagen eingegeben werden, Schutzgeräte konfiguriert und entsprechende Kommunikationsnetzwerke zwischen den Geräten im Wesentlichen manuell projektiert werden. Dies geschieht offline, wobei anschließend die erstellen Parametrierungen über ein Kommunikationsnetzwerk auf die jeweiligen Schutzgeräte übertragen werden können. Die Topologien von Schaltanlagen werden als 1-phasige Darstellung angelegt und Hardware und Netzwerke auf grafischer Basis (symbolisch) hinzugefügt. Mit der Funktion "Continuous Function Chart" (Seite 294 ff.) können auch Verriegelungsbedingungen durch den Benutzer manuell parametriert werden, wobei Boolsche Gleichungen eingesetzt werden.

Ferner ist aus der Druckschrift US 2010 / 204948 A1 ein gattungsgemäßes Verfahren bekannt.

An die Erfindung stellt sich die Aufgabe, ausgehend von dem bekannten Verfahren gemäß der DIGSI 5 Software ein Verfahren anzugeben, mit dem besonders einfach, sicher und schnell eine automatische Parametrierung von Verriegelungs- und oder Freigabebedingungen für Feldleitgeräte und/oder Schutzgeräte einer Schaltanordnung vorgenommen und bei Bedarf angepasst werden kann.

Die Erfindung löst diese Aufgabe durch ein Verfahren gemäß Anspruch 1.

Feldleitgeräte und/oder Schutzgeräte werden im Rahmen dieser Anmeldung zusammengefasst als Geräte bezeichnet.

Eine Parametrierung im Sinne der Erfindung ist das Einstellen eines Geräts mit allen für den Betrieb notwendigen Informationen, Betriebsparametern, etc.

Das Erkennen von Verriegelungs- und/oder Freigabebedingungen bedeutet, dass beispielsweise ein erstes Gerät dahingehend parametriert wird, dass es bei Kenntnis der Schaltstellungen anderer Geräte der Schaltanordnung einen Schaltbefehl freigibt oder diesen blockiert. Eine Verriegelungsbedingung kann für ein Gerät beispielsweise derart angegeben werden, dass bei Kenntnis anderer Schaltstellungen innerhalb der Schaltanordnung (übermittelt von anderen Geräten) ein Schaltbefehl blockiert wird, weil dieser eine Spannung auf Erde schalten würde. Eine geeignete Möglichkeit zur Angabe von Verriegelungsbedingungen sind boolesche Gleichungen (in der Art: "Wenn Schalter x geschlossen, dann Öffnen Schalter y blockieren").

Eine Kommunikationsverbindung im Sinne der Erfindung ist nicht ausschließlich als eine physische Leitung oder optische Verbindung oder Funkverbindung zu verstehen, sondern vielmehr als die bei einem Gerät benötigten Informationen, um mit einem oder mehreren anderen Geräten zu kommunizieren. Es handelt sich bei einer Angabe einer Kommunikationsverbindung für ein Gerät also beispielsweise um eine Information, welche angibt auf welche Weise durch das betreffende Gerät einem anderen Gerät etwas mitgeteilt werden soll. Diese Information kann beispielsweise eine Schaltstellung eines dem Gerät zugeordneten Leistungsschalters umfassen; wobei diese Schaltstellung einem oder mehreren anderen Geräten als eine Nachricht mit einer bestimmten Gerätekennung (IP-Adresse, Header, oder dergleichen) mitgeteilt werden soll.

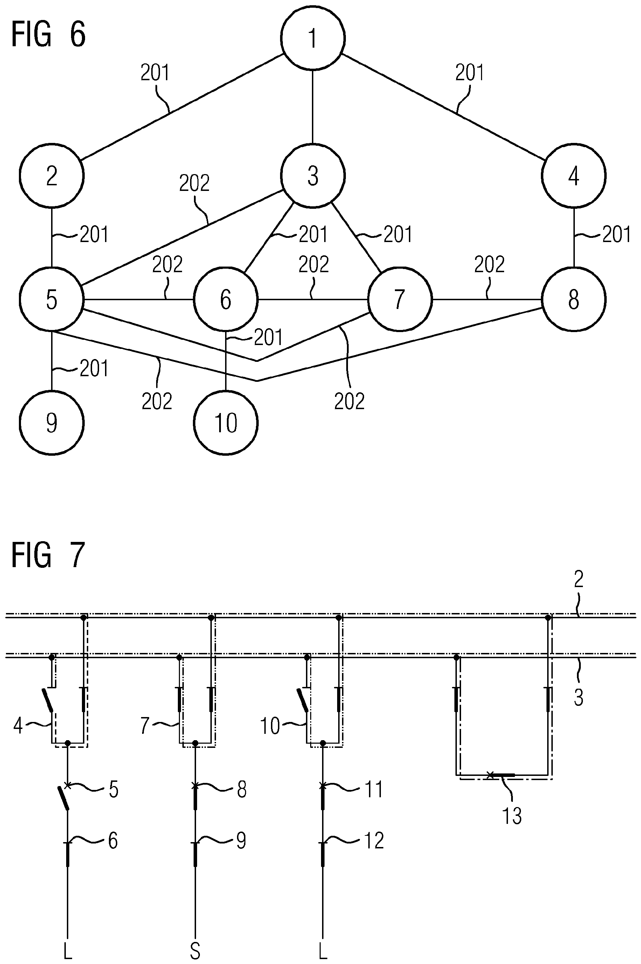

Eine Erkennung der Topologie kann beispielsweise mittels der in dieser Anmeldung beschriebenen "modifizierten Suche" (Figuren 6 bis 8) einer Topologie erfolgen.

Eine Topologie im Sinne der Erfindung ist die Verschaltung von Komponenten der Schaltanordnung wie z.B. Sammelschienen, Trennschalter und Leistungsschalter. Die Topologieinformation ist eine Information, die diese Verschaltung wiedergibt.

Es ist ein Vorteil der automatischen Parametrierung, dass die Verriegelungs- und oder Freigabebedingungen automatisch aus der Topologie abgeleitet werden, weil so der Plandungsaufwand für ein neues Feld mit Feldleitgeräten und/oder Schutzgeräten gering ist. Außerdem ist es vorteilhaft, dass bei einer Änderung des Feldes wie z.B. bei dem Einsatz neuer Feldleitgeräte und/oder Schutzgeräte oder einem veränderten Versorgungsnetz besonders schnell und einfach eine Aktualisierung der Verriegelungs- und oder Freigabebedingungen vorgenommen werden kann.

Dies ist bei der Inbetriebnahme einer Anlage mit zum Beispiel 40 Schaltfeldern ein wesentlich geringerer Aufwand als für eine vergleichbare Anlage, bei der nach herkömmlicher manueller Parametrierung jedes Feldleitgerätes und/oder Schutzgerätes rund 2500 Logik - Bausteine (beispielsweise in der Software SIPROTEC CFC der Siemens AG) verbunden sowie entsprechende Kommunikationsverbindungen per Hand eingegeben werden müssen. So kann die Inbetriebnahme mit wesentlich weniger Aufwand und mit einer viel geringeren Fehlerwahrscheinlichkeit durchgeführt werden.

Es muss bei der Inbetriebnahme lediglich z.B. im so genannten Single Line Editor ein Abbild der Schaltanlage gezeichnet und entsprechend die Schaltgeräte den Schutz- und Feldleitgeräten zugewiesen werden. Anschließend kann, nach erfolgter Parametrierung der Feldleitgeräte und/oder Schutzgeräte, eine einfache und sichere Verriegelung und Freigabe von Schalthandlungen zwischen den Feldleitgeräten und/oder Schutzgeräten geregelt werden. Dies ist ein wesentlicher Vorteil gegenüber den eingangs geschilderten Verfahren des Standes der Technik, bei denen eine zentrale Steuerung der Verriegelung und Freigabe von Schalthandlungen erfolgt. Die Verriegelungs- oder Freigabeentscheide müssen also nicht mehr zentral von einem Gerät in der Schaltanlage erfolgen, sondern können dezentral und feldübergreifend auf die Geräte verteilt werden. Das führt dazu, dass auch bei Ausfall eines Gerätes weiterhin die nicht vom Ausfall betroffenen Felder feldübergreifend verriegelt oder frei geschaltet werden können.

Weitere Vorteile bietet das erfindungsgemäße Verfahren auch bei einer Erweiterung oder Veränderung der Anlage oder bei einer Änderung der Betriebsphilosophie. In diesem Fall muss lediglich das Single-Line-Diagramm oder die Parameter zur Beschreibung der Betriebsphilosophie entsprechend angepasst werden. Die notwendige Anpassung der Parametrierung der Feldleitgeräte und/oder Schutzgeräte wird durch das erfindungsgemäße Verfahren anschließend automatisch vorgenommen.

Im Gegensatz dazu kann es bei einer konventionell geplanten Anlage mit verknüpften Logikbausteinen (SIPROTEC CFC-Plänen) dazu kommen, dass alle oder fast alle Verknüpfungen angepasst werden müssen, was einen sehr hohen Engineering- und Testaufwand nach sich zieht.

Zusätzlich besteht die Möglichkeit, über eine Umschaltung die betriebsbedingten Verriegelungen oder Freigaben aufzuheben. Diese Aufhebung der betriebsbedingten Verriegelung oder Freigabe kann für alle Felder oder nur auf ausgewählte Felder angewendet werden. Sie erlaubt eine hohe Sicherheit kombiniert mit betrieblicher Flexibilität. Die sicherheitsrelevante Verriegelung kann vollständig erhalten bleiben und auf diese Weise unzulässige Schalthandlungen verhindern. Ist es für Wartungsarbeiten an einem Feld trotzdem notwendig, auch die sicherheitsrelevanten Bedingungen aufzuheben, so kann dies auch auf ein Feld beschränkt geschehen.

In einer bevorzugten Ausführungsform des erfindungsgemäßen Verfahrens ist im Betrieb der Schaltanordnung eine Verriegelung oder Freigabe einer Schalthandlung in dem mindestens einen Gerät dezentral steuerbar. Dabei wird das Gerät durch die Bereitstellung der ermittelten Verriegelungs- und/oder Freigabebedingungen und den Kommunikationsverbindungen und der Topologie in die Lage versetzt, selbstständig über Freigabe oder Verriegelung zu entscheiden. Es muss folglich über eigene Rechnermittel verfügen, um die Topologie auszuwerten. Dies ist ein Vorteil, weil keine zentrale Steuereinrichtung für die Geräte benötigt wird, was Kosten einspart. Außerdem wird die Verfügbarkeit verbessert, weil durch die dezentrale Steuerung ein Weiterbetrieb der Schaltanordnung auch dann gewährleistet ist, wenn ein Gerät ausfällt. Dies wäre bei einer zentralen Steuerung nicht der Fall.

In einer bevorzugten Ausführungsform des erfindungsgemäßen Verfahrens ist im Betrieb der Schaltanordnung eine Verriegelung oder Freigabe einer Schalthandlung in dem mindestens einen Gerät zentral steuerbar. Dabei werden Entscheidungen über Freigabe oder Verriegelung zentral in einer Steuereinrichtung getroffen, die entsprechend über Rechnermittel verfügt. Dies ist ein Vorteil, die zentral gesteuerten Geräte keine eigenen Rechnermittel - oder für eine geringere Rechenleistung ausgelegte Rechnermittel als bei einer dezentralen Steuerung nötig wären - benötigen, was Kosten einspart.

In einer bevorzugten Ausführungsform des erfindungsgemäßen Verfahrens ist im Betrieb der Schaltanordnung eine Verriegelung oder Freigabe einer Schalthandlung in dem mindestens einen Gerät zentral steuerbar.

In einer weiteren bevorzugten Ausführungsform des erfindungsgemäßen Verfahrens ist die Schaltanordnung Teil eines elektrischen Versorgungsnetzes und als Topologieinformation wird ein Ein-Linien-Diagramm der Verschaltung von Sammelschienen, Feldern, Netzgruppen, Leistungsschaltern, Trennschaltern, Feldleitgeräten und/oder Schutzgeräten verwendet.

Dabei kann das elektrische Versorgungsnetz Hochspannungs-Mittelspannungs-, Niederspannungsnetz oder ein Bahnstromnetz sein.

Diese Ausführungsform ist vorteilhaft, weil auf diese Weise mittels des Einzel-Linien-Diagramms (engl. "Single-Line-Diagramm") eine besonders einfache Eingabe und Darstellung der Topologie des Versorgungsnetzes möglich ist. Eine Eingabe des Einzel-Linien-Diagramms kann beispielsweise mittels des so genannten Single Line Editors in der Software DIGSI der Siemens AG erfolgen. Ein Ein-Linien-Diagramm ist eine graphische Darstellung einer Schaltanordnung.

Die graphische Darstellung kann dabei eine Zeichnung sein, die auf Papier vorliegt und eingescannt wird oder eine auf einem Computer erstellte Computergraphik.

In der Regel wird eine Computergraphik verwendet, die auf einem Bildschirm dargestellt und in einer Datei gespeichert werden kann. Dabei kann es sich um eine Bilddatei oder um eine Datei handeln, die in einem geeigneten Format direkt die Verknüpfungen zwischen Komponenten des Versorgungsnetzes ablegt.

Unter einer graphischen Darstellung ist in dieser Anmeldung das Bild selbst oder eine Datei, die eine Wiedergabe des Bildes ermöglicht und dieses abspeicherbar macht, zu verstehen.

In einer weiteren bevorzugten Ausführungsform des erfindungsgemäßen Verfahrens ist das Versorgungsnetz im Sinne der Erfindung ein elektrisches Energieübertragungsnetz oder ein fluidleitendes Übertragungsnetz wie z.B. ein Wasserversorgungsnetz oder ein Gasversorgungsnetz, das jeweils mittels entsprechenden Feldleitgeräten und Schaltventilen gesteuert werden kann.

In einer weiteren bevorzugten Ausführungsform des erfindungsgemäßen Verfahrens werden für das Erkennen von Verriegelungs- und/oder Freigabebedingungen sicherheitsrelevante Verriegelungs- und/oder Freigabebedingungen und betriebsbedingte Verriegelungs- und/oder Freigabebedingungen berücksichtigt. Dies ist ein Vorteil, weil durch die Berücksichtigung von betriebsbedingten Verriegelungs- und/oder Freigabebedingungen über die sicherheitsrelevanten Aspekte hinaus eine Betriebsphilosophie auf einfache Weise berücksichtigt werden kann.

In einer weiteren bevorzugten Ausführungsform des erfindungsgemäßen Verfahrens werden betriebsbedingte Verriegelungs- und/oder Freigabebedingungen anhand einer vorgegebenen Betriebsphilosophie automatisch parametriert werden. Dies ist ein Vorteil, weil nach Eingabe oder sonstigen Bereitstellung von Parametern für eine bestimmte Betriebsphilosophie auch die daraus resultierenden betriebsbedingte Verriegelungs- und/oder Freigabebedingungen automatisch parametriert werden können.

In einer weiteren bevorzugten Ausführungsform des erfindungsgemäßen Verfahrens wird die Topologieinformation mittels eines Suchverfahrens erkannt, bei dem mit einer gefundenen Sammelschiene und/oder einem Sammelschienenabschnitt elektrisch leitend verbundene Sammelschienen und/oder Sammelschienenabschnitten als ein zuhängender Knoten betrachtet werden. Dies ist ein Vorteil, weil so sichergestellt wird, dass sowohl bei einer Breitensuche als auch bei einer Tiefensuche jeweils die gesamte Topologie erkannt wird.

In einer bevorzugten Weiterbildung des Suchverfahrens wird eine Breitensuche angewandt. Die Breitensuche wird bevorzugt vor der Tiefensuche ausgeführt. Es wird zunächst ausgehend von einem Schalter, für den eine Freigabe oder Verriegelung entschieden werden soll, in irgendeine Richtung entlang der Topologie gesucht. Wird ein Sammelschienenabschnitt gefunden, so werden dazu benachbarte Sammelschienenabschnitte gesucht und zusammen als ein Knoten betrachtet. Anschließend wird die Breitensuche weiter durchgeführt, bis die ganze Topologie erkannt wurde. Als Ergebnis liefert die Breitensuche den kürzesten parallelen Pfad oder das Potentialdouble (Knoten höchstem Potential von beiden Seiten des Schalters).

In einer bevorzugten Weiterbildung des Suchverfahrens wird eine Tiefensuche angewandt. Die Breitensuche wird bevorzugt nach der Breitensuche ausgeführt. Es wird zunächst ausgehend von einem Schalter, für den eine Freigabe oder Verriegelung entschieden werden soll, die von beiden Seiten des Schalters nächsten Sammelschienen gesucht, wobei wie eingangs geschildert wieder zugehörige Abschnitte der Sammelschienen als einen Knoten betrachtet werden. Daraufhin wird die Tiefensuche wie bekannt fortgeführt, wobei weitere entdeckte Sammelschienen wieder für die Definition gemeinsamer Knoten verwendet werden. Dies wird fortgesetzt, bis die gesamte Topologie erkannt wurde. Als Ergebnis liefert die Tiefensuche, welche parallelen Pfade vorhanden sind und welche Länge diese aufweisen. Dabei ist die Länge der Pfade insbesondere relevant für betriebsbedingte Verriegelungen.

Die Kombination der Breitensuche und der Tiefensuche stellt in vorteilhafter Weise sicher, dass die Topologie komplett und korrekt auch bei komplexen Schaltanordnungen erkannt werden kann.

D.h., dass bei der Breitensuche wie im Stand der Technik üblich gesucht wird - mit der Ergänzung, dass bei Finden einer Sammelschiene nach weiteren elektrisch leitend verbundenen Sammelschienenabschnitten gesucht wird, um diese als einen Knoten zu betrachten. Eine Tiefensuche wird verwendet, wenn die Breitensuche parallele Pfade findet, aber der kürzeste gefunden Pfad nicht ausreichende Kriterien liefert. Bei der Tiefensuche wird beidseitig die Sammelschiene gesucht, diese auch auf weiter zusammenhängende Abschnitte untersucht und dann in weiterer Folge die Tiefensuche durchgeführt. Stößt die Tiefensuche wieder auf Sammelschienenabschnitte so werden auch diese wieder auf verbundene Abschnitte untersucht und als ein Knoten betrachtet, bevor die Suche fortgesetzt wird.

In einer weiteren bevorzugten Ausführungsform des erfindungsgemäßen Verfahrens werden nur Kommunikationsverbindungen parametriert, die für eine Übertragung von für das jeweilige Gerät relevanten Informationen über Schalterstellungen von den jeweils anderen Geräten benötigt werden, so dass die Datenkommunikation zwischen den Geräten minimiert wird.

Dies ist vorteilhaft, weil die Datenkommunikation über Schaltstellungen und daraus resultierende Freigaben oder Verriegelungen auf die relevanten Fälle beschränkt wird, was Ressourcen wie etwa die benötigte Bandbreite einer Datenkommunikation schont und so Kosten einspart. Nicht entscheidende Schaltstellungen werden nicht abgefragt. Es kann so beispielsweise eine Kommunikationslast an einem Stationsbus verringert werden. Ein weiterer Vorteil ist es, dass die die Verwendung einer reduzierten Topologie es ermöglicht, mit einer vergleichsweisen geringeren Rechenleistung und geringerem Speicherplatz in einem einzelnen Feldleitgerät oder Schutzgerät auszukommen, was Kosten einspart.

In einer weiteren bevorzugten Ausführungsform des erfindungsgemäßen Verfahrens werden die festgelegten Verriegelungs- und/oder Freigabebedingungen in einer allgemeinen Konfigurationsdatei gespeichert, die Parameter der Feldleitgeräte und/oder Schutzgeräte beinhaltet, und es werden jeweils Angaben über die für ein einzelnes Gerät anhand der erkannten Topologie relevanten Verriegelungs- und/oder Freigabebedingungen und die für das jeweilige Gerät parametrierten Kommunikationsverbindungen in jeweils einer gerätespezifischen Konfigurationsdatei gespeichert, die an das jeweilige Gerät übermittelt wird.

Dies ist ein Vorteil, weil durch die zentrale Erfassung aller wichtigen Daten in einer allgemeinen Konfigurationsdatei eine einfache Übersicht und leichte Möglichkeit zur Aktualisierung von Daten gegeben ist, während die spezifischen Konfigurationsdateien eine automatische Parametrierung der einzelnen Feldleitgeräte und/oder Schutzgeräte ermöglichen.

In einer weiteren bevorzugten Ausführungsform des erfindungsgemäßen Verfahrens werden gemäß dem Standard IEC 61850-8-1 als allgemeine Konfigurationsdatei eine so genannte "system configuration description (SCD)" Datei und als spezifische Konfigurationsdateien so genannte "configured intelligent device description (CID)" Dateien verwendet, wobei die "configured intelligent device description (CID)" Dateien dem "Generic Object Oriented Substation Events (GOOSE)" Standard entsprechen. Dies ist ein Vorteil, weil der Standard IEC 61850-8-1 weit verbreitet ist und beispielsweise auch die Kommunikation über eine Internet-Verbindung oder Ethernet gestattet.

In einer weiteren bevorzugten Ausführungsform des erfindungsgemäßen Verfahrens werden zusätzlich Spannungs- und Strommessgeräte der Schaltanordnung automatisch erkannt. Dabei wird beispielsweise die Position und Zugehörigkeit der Spannungs- und Strommessgeräte zu Lastabgängen erkannt und es können zusätzliche Funktionen zur Verfügung stehen. Dies ist ein Vorteil, weil somit die gesamte Schaltanordnung für den Betrieb automatisch parametriert werden kann.

Ferner stellt sich an die Erfindung die Aufgabe, ausgehend von der DIGSI5 Software eine Anordnung anzugeben, mit der besonders einfach, sicher und schnell eine automatische Parametrierung von Verriegelungs- und oder Freigabebedingungen für Feldleitgeräte und/oder Schutzgeräte einer Schaltanordnung vorgenommen und bei Bedarf angepasst werden kann.

Die Erfindung löst diese Aufgabe durch eine Anordnung nach Anspruch 10.

Bevorzugte und vorteilhafte Ausführungsformen der erfindungsgemäßen Anordnung ergeben sich aus den Ansprüchen 11 bis 15.

Dabei ergeben sich sinngemäß für die erfindungsgemäße Anordnung und ihre Ausführungsformen die gleichen Vorteile wie eingangs für das erfindungsgemäße Verfahren erläutert.

Um die Funktionsweise der Erfindung näher zu erläutern, wird im Folgenden ein erstes bevorzugtes Ausführungsbeispiel der Erfindung angegeben.

Dabei sind folgende Schritte durchzuführen:
1) Zeichnen der Schaltanlage im Single Line Editor der DIGSI 5 Software.
2) Eingabe der Schaltanlagenkonfiguration (z.B.Normal, 1 ½ Leistungsschalter, Ringsammelschiene)in DIGSI5.
3) Eingabe der Sammelschienen (Nummer und Abschnitte) in DIGSI5
4) Eingabe von Feldleitgeräten und/oder Schutzgeräten, Schaltgeräten, Trennschaltern und Leistungsschaltern sowie Zuordnung der Feldleitgeräten und/oder Schutzgeräten zu den durch sie gesteuerten Schaltgeräten bzw. Schaltern in DIGSI 5.
5) Automatisches Erkennen der Topologie der Schaltanordnung anhand der Topologie bzw. der in DIGSI 5 gezeichneten Schaltanlage mittels einer modifizierten Suche (s. Fig. 6 bis 8).
6) Erstellung von betriebsbedingten Verriegelungsbedingungen bzw. Eingabe einer Betriebsphilosophie. Sicherheitsrelevante Verriegelungsbedingungen sind dem System bekannt (z.B. keine Spannung auf Erde schalten, s. Einleitung). Auf dieser Basis werden automatisch GOOSE-Verbindungen für ein Kommunikationsnetzwerk zwischen den jeweiligen Feldleitgeräten und Schutzgeräten parametriert.
7) Es werden nur GOOSE-Verbindungen berücksichtigt, die für eine Übertragung von für das jeweilige Gerät relevanten Informationen über Schalterstellungen von den jeweils anderen Geräten benötigt werden, so dass die Datenkommunikation im Kommunikationsnetzwerk minimiert wird.
8) Übertragen der Konfiguration (Topologie,Freigabe- oder Verriegelungsbedingungen, insbesondere betriebsbedingte Freigabe- oder Verriegelungsbedingungen) mitsamt Angaben zu den parametrierten GOOSE-Verbindungen (Kommunikationsverbindungen) an die Feldleitgeräte und Schutzgeräte.
9) Im Betrieb der Schaltanlage werden anschließend Verriegelungsentscheidungen auf Basis der reduzierten Topologie (nur aus Sicht des jeweiligen Schutzgeräts relevante Schaltstellungen werden berücksichtigt) in jedem Gerät dezentral getroffen, wobei Informationen über relevante Schaltstellungen anderer Trennschalter und/oder Leistungsschalter mittels der automatisch generierten Goose-Verbindungen übermittelt werden.

Es ergeben sich somit im direkten Vergleich mit den bekannten Verfahren zur Parametrierung von Verriegelungs- und/oder Freigabebedingungen für Feldleitgeräte und/oder Schutzgeräte einer Schaltanordnung folgende neue Aspekte:
- Die automatische Erkennung der Topologie erfolgt mittels einer modifizierten Suche, die sicher alle relevanten Pfade erkennt.
- Automatisches Erkennen der Elemente in dem Single-Line Diagram anhand von Feldtyp und angeschlossenen Knoten.
- Betriebsbedingte Verriegelungsbedingungen, beispielsweise zur Einhaltung einer vorgegebenen Schaltreihenfolge von Leistungs- und Trennschaltern, können automatisch berücksichtigt werden.
- Bei der modifizierten Suche eine Verwendung der Länge (Anzahl) der Schaltelemente im parallelen Pfad, um Zulässigkeit von Schalthandlungen zu überprüfen.
- Länge der Schaltelemente Berücksichtigen für die parallelen Pfade.
- Veränderliche Schaltelementlänge in der Art, dass bei einer Kupplung von zwei längsgetrennten Sammelschienenabschnitten die Länge der Elemente gleich null gesetzt wird (ansonsten ist die Länge einheitlich gleich 1).

Zur besseren Erläuterung der Erfindung zeigen in schematischer Darstellung
- Figur 1: ein erstes Ausführungsbeispiel einer Schaltanordnung, und
- Figur 2: ein Beispiel für eine Einteilung von Schaltern des ersten Ausführungsbeispiels in für eine Verriegelung relevante Schaltstellungen und nicht relevante Schaltstellungen, und
- Figur 3: ein zweites Ausführungsbeispiel einer Schaltanordnung, und
- Figur 4: ein drittes Ausführungsbeispiel einer Schaltanordnung, und
- Figur 5: ein viertes Ausführungsbeispiel einer Schaltanordnung, und
- Figur 6: ein erstes Ausführungsbeispiel einer Topologieerkennung, und
- Figur 7: ein zweites Ausführungsbeispiel einer Topologieerkennung, und
- Figur 8: ein drittes Ausführungsbeispiel einer Topologieerkennung.

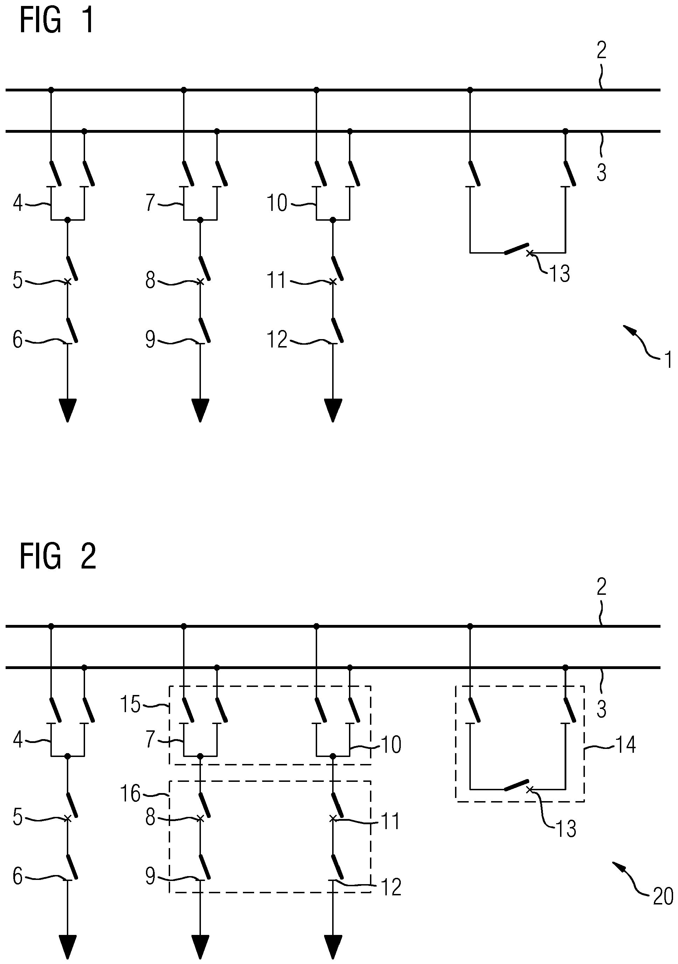

In der Figur 1 weist die Schaltanlage 1 zwei Sammelschienen 2,3 auf, an die 4 Felder mit Feldleitgeräten und/oder Schutzgeräten angeschlossen sind.

Über die Trennschalter 4 kann das erste Feld entweder auf Sammelschiene 2 oder auf Sammelschiene 3 geschaltet werden. Im ersten Feld sind weiterhin ein Leistungsschalter 5 sowie ein Trennschalter 6 vorgesehen. In gleicher Weise sind das zweite Feld, bestehend aus Trennschalter 7, Leistungsschalter 8 und Trennschalter 9 sowie das dritte Feld, bestehend aus Trennschalter 10, Leistungsschalter 11 und Trennschalter 12, aufgebaut.

Das vierte Feld ist ein Kupplungsfeld 13 mit drei Schaltern.

Soll für diese Schaltanlage ein Schaltfehlerschutz implementiert werden, so ist für die Schaltentscheidungen im ersten Feld nicht notwendig, von allen Schaltern die aktuelle Position zu kennen.

In Figur 2 sind die gleichen Baugruppen wie in Figur 1 mit den gleichen Bezugszeichen versehen. Es sind die Leistungsschalter 8 und 11 und die Trennschalter 9 und 12 des zweiten bzw. dritten Feldes in der Box 16 gestrichelt eingerahmt dargestellt, da diese Schaltelemente für eine Entscheidung der Schaltfreigabe von Schaltelementen im ersten Feld keine Rolle spielen. So sind nur die Kupplung 14 der Sammelschienen und die Trennschalter 7 und 10 (Box 15), die an die Sammelschienen angrenzen, von Interesse.

Wird beispielsweise einer der Trennschalter 7 in der Box 15, die das zweite Feld mit den Sammelschienen verbinden, geschlossen, so kann davon ausgegangen werden, dass auch der Leistungsschalter 8 und der Abgangstrennschalter 9 geschlossen werden. Aus dieser Annahme kann gefolgert werden, dass die Information über die Schaltstellung von Leistungsschaltern und Abgangstrennschalter anderer Felder für die Verriegelung in dem einem bestimmten Feld nicht benötigt werden, um korrekte Verriegelungsentscheide treffen zu können.

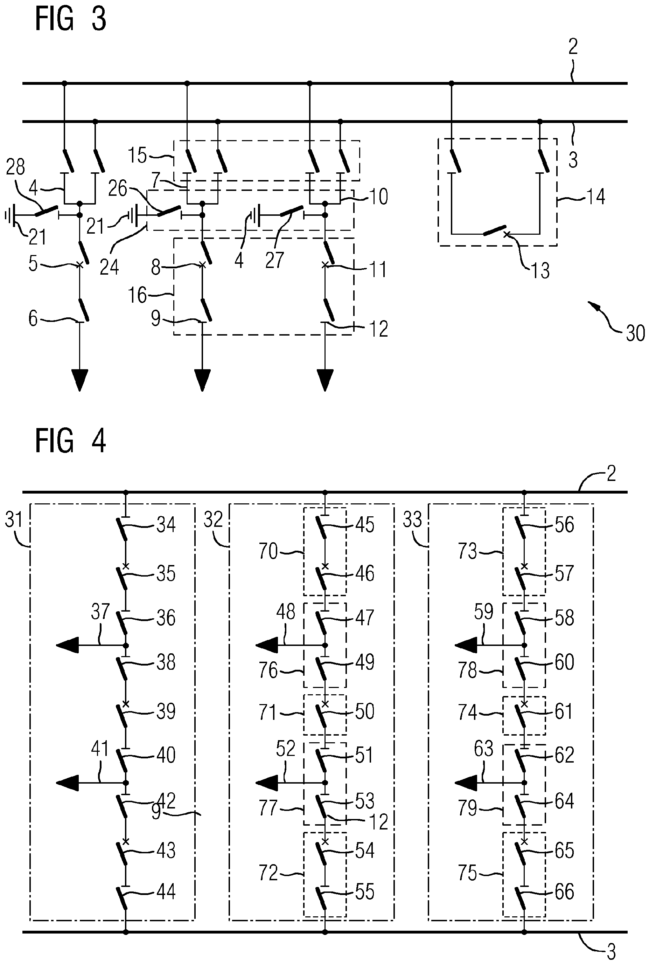

Die Figur 3 zeigt zusätzlich zu den bereits aus den Figuren 1 und 2 bekannten Bauelementen noch je einen Erdungsschalter 26,27,28 für jedes der drei Felder links in der Figur. Mittels des Erdungsschalters 26,27,28 kann die jeweilige Seite des Leistungsschalters auf Erdpotential 21 geschaltet werden.

Ist z.B. im Rahmen einer vorgegebenen Betriebsphilosophie ein "Weiterschalten von Erdpotential" für betriebsbedingte Verriegelung aktiviert, so ist es notwendig, zusätzlich zu den bereits erwähnten Schaltgeräten auch noch die Stellungen der Erdungsschalter 26,27 zu übertragen, die an einen Knoten der Sammelschienentrennschalter 4,7,10 angrenzen. Daher sind die Schalter 26 und 27 (Box 24) für die Schaltentscheidungen der Elemente 4,5,6,21 zu berücksichtigen, neben den bisher schon zu berücksichtigen Schaltern 7,10,13 (Boxen 15,14). Nicht benötigt werden die Schaltstellungen der Schalter 8,9,11,12 in Box 16.

Die Figur 4 zeigt eine Schaltanlage mit einer so genannten Eineinhalb-Leistungsschalter Konfiguration. Oben und unten in der Figur befinden sich die Sammelschienen 2 und 3. Es sind in den Boxen 31,32 und 33 gestrichelt eingerahmt drei Buchten bzw. Abschnitte mit zahlreichen Leistungsschaltern und Trennschaltern dargestellt. Mit den Pfeilen 37,41,71,72,63,67 sind die Anschlüsse der Felder an nachgeschalte Elemente des Versorgungsnetzes angedeutet. Es ist ein wesentlicher Vorteil der sogenannten Eineinhalb-Leistungsschalter Konfiguration, bei der in jedem Feld drei Leistungsschalter für zwei Abgänge verwendet werden, dass auch bei Ausfall einzelner Schalter eine Energieversorgung der Abgänge "von der anderen Seite her" erfolgen kann.

Für die 1 ½ Leistungsschalterkonfiguration der Schalter in Box 31 (Schalter 34,35,36,38,39,40,42,43,44) werden die Schaltstellungen der Schalter in den Boxen 70, 71,72,73,74 und 75 benötigt (Schalternummern 45,46,50,54,55,56,57,61,65 und 66).

Nicht benötigt werden die Schaltstellungen der Schalter in den Boxen 76,77,78 und 79 (Schalternummern
47, 49, 51, 53, 58, 60, 62 und 64).

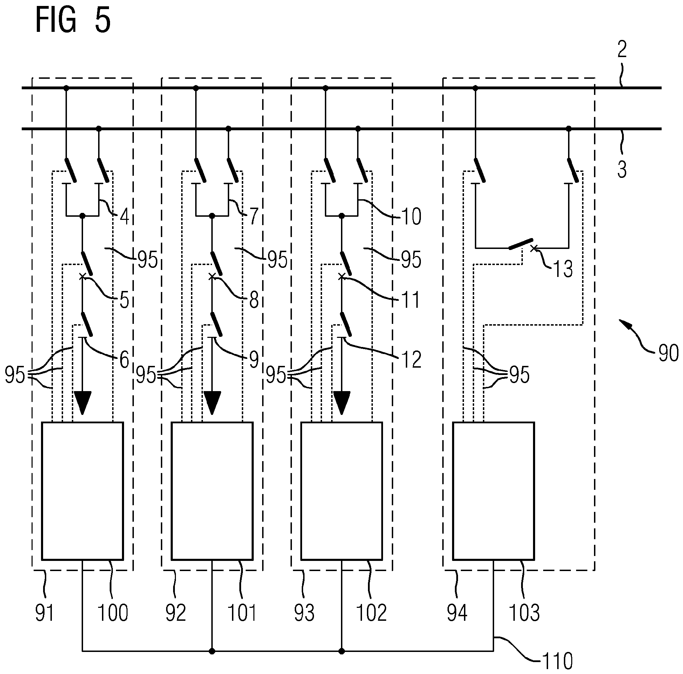

In der Figur 5 ist eine den Figuren 1 und 2 vergleichbare Schaltanlage 90 dargestellt, bei der zusätzlich in jedem der mit gestrichelten Boxen 91 bis 94 umrandeten Felder ein Feldleitgerät 100-103 angeordnet ist, dass über Kommunikationsverbindungen 95 mit den jeweiligen Schaltern des Feldes verbunden ist. Die Kommunikationsverbindungen 95 stellen eine direkte Verdrahtung zwischen dem jeweiligen Feldleitgerät oder Schutzgerät 100-103 und der jeweiligen Schaltersteuerung dar; es werden Schaltbefehle zum Öffnen und Schließen der Schalter übertragen. Über den Kommunikationsbus 110 sind die Schutzgeräte 100-103 miteinander verbunden, um untereinander Informationen über Schaltstellungen in den benachbarten Feldern auszutauschen. Dabei können die Schaltstellungen der Schalter in den jeweiligen Feldern beispielsweise mittels GOOSE-Nachrichten ausgetauscht werden. Als mögliche Ergänzung dieser Ausführungsform kann an den Kommunikationsbus 110 auch eine Verbindung zu einer Steuereinrichtung für die gesamte Schaltanlage vorgesehen sein (nicht gezeigt), so dass neben der dezentralen Entscheidung über Verriegelung oder Freigabe von Schalthandlungen auch eine zentrale Steuereinrichtung informiert werden kann.

Fällt beispielsweise das Feldleitgerät 100 aus, so kann es Informationen über die Schalterstellungen der Schalter im ersten Feld (Box 91) nicht mehr an die Feldleitgeräte 101-103 übertragen. Ein Ausfall kann z.B. dadurch erkannt werden, dass die Feldleitgeräte 101-103 keine aktuellen Daten über GOOSE mehr vom Feldleitgerät 100 erhalten. Dennoch kann immer noch der Rest der Anlage verriegelt schalten, denn die Steuerung der Schalter in den anderen Feldern erfolgt dezentral mittels der dort angeschlossenen Feldleitgeräte 101-103. Diese können dann noch untereinander die aktuellen Schaltstellungen austauschen und beispielsweise mittels eines Datenspeichers, der die letzten gültigen Schalterstellungen des ersten Feldes bereit hält, auch den Schaltzustand des ersten Feldes für die Auswertung berücksichtigen. Dabei besteht allerdings die Einschränkung, dass in die Schalterstellungen der anderen Felder nur so eingegriffen werden darf, dass es in den anderen Feldern zu keinen unzulässigen Betriebszuständen kommen kann. Dies bedeutet, dass z.B. im Abgangsfeld ausgeschaltet werden darf, es aber keine Einschaltung des Abgangsfeldes geben darf und bei einem Ausfall im Kupplungsfeld dürfen keine Änderungen im Kupplungsfeld vorgenommen werden. Im Zweifel können Schalter, deren Schaltstellung nicht bestimmt werden kann, in Abgangsfeldern als geschlossen angesehen werden und Kupplungsfelder als offen.

Im Gegensatz dazu würde bei einer Schaltanlage mit einem zentralen Gerät, das die feldübergreifenden Verriegelungsbedingungen festlegt und die Schalterstellungen der einzelnen Felder steuert, bei Ausfall dieses zentralen Geräts keine verriegelten Schalthandlungen mehr durchgeführt werden.

Anhand der Figuren 6 bis 8 wird im Folgenden auf eine modifizierte Suche bei der Erkennung der Topologie eines Netzwerks, z.B. einer Schaltanordnung, eingegangen.

Um aus einem Single-Line-Diagram sicher und schnell die Topologie einer Schaltanlage erkennen zu können, muss eine gegenüber dem Stand der Technik verbesserte Mustererkennung bzw. ein verbessertes Suchverfahren durchgeführt werden.

Wird eine Breitensuche und Tiefensuche durchgeführt, so ergibt sich das Problem, dass zwar alle Knoten besucht aber nicht alle Kanten berücksichtigt werden (vgl. Figur 6). Deswegen wird möglicherweise nicht der benötigte parallele Pfad gefunden. Wie in Figur 6 beispielhaft dargestellt, werden alle Knoten 1 bis 10 gefunden; bei den Kanten werden aber nur die Kanten 201 in Betracht gezogen. Die Kanten 202 aber eben nicht, weil diese von den Knoten nicht mehr zu neuen Knoten führen.

Überträgt man diesen Ansatz auf eine Schaltanlage, und sucht - in Figur 7 - mittels einer Tiefensuche ausgehend vom linken der beiden Schalter 4, so findet man als erstes die Sammelschiene 3, dann die geschlossenen Trennschalter im Feld S und kommt zurück zur Seite des o.g. Schalters 4 (gestrichelte Linie mit jeweils zwei Punkten). Die Kupplung 13 wird zwar gefunden (gestrichelte Linie mit jeweils einem Punkt), aber der parallele Pfad nicht, da der linke der beiden Schalter 4 ja bereits als gesehen markiert wurde als der Weg über die Trennschalter 7 gefunden wurde.

Wenn also gefordert wird, dass eine Kupplung geschlossen sein muss, so muss auch der Pfad gefunden werden. Dies kann erreicht werden, indem eine modifizierte Breiten- und Tiefensuche verwendet wird.

Dabei werden ausgehend vom betrachteten Schaltelement die verbundenen Sammelschienen gesucht, und die Tiefensuche von dort gestartet. Wenn ein Sammelschienenabschnitt gefunden wurde, so wird nach weiteren verbundenen Sammelschienenabschnitten derselben ersten Sammelschiene gesucht, die mit der ersten Sammelschiene verbunden sind und damit als ein Knoten betrachtet werden können. So kann bei größeren Anlagen sicher der kürzeste Parallele Pfad gefunden werden mit der Breitensuche; bei der Tiefensuche werden die notwendigen parallelen Pfade gefunden und identifiziert.

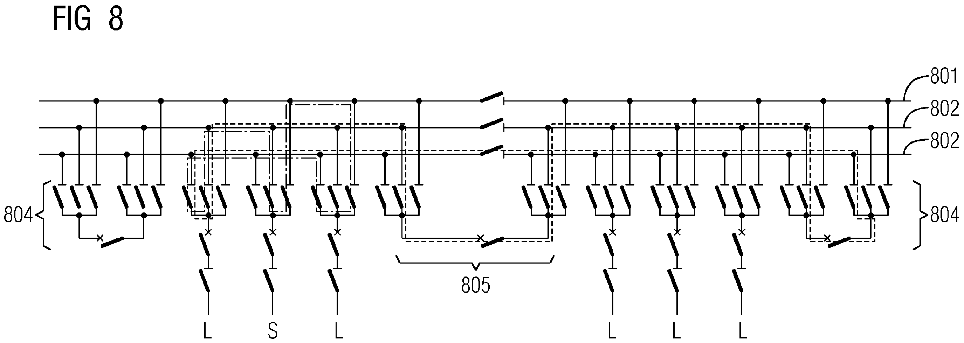

Ein Beispiel für eine so modifizierte Suche ist in Figur 8 dargestellt. Dabei sind drei Sammelschienen 801,802,803 in einen rechten und einen linken Abschnitt geteilt, die über eine Kupplung 805 verbunden sind. Jeder Abschnitt weist außerdem eine Abschnittskupplung 804 auf. In beiden Abschnitten sind jeweils drei Felder vorgesehen.

Bei solchen größeren Anlagen, die längsgetrennt sind, wird beispielsweise der Pfad im linken Abschnitt zuerst gefunden - der abschnittsübergreifende Pfad über die Kupplungen 805 und die rechte Kupplung 804 wird nicht erkannt. Dieses Problem besteht auch wenn die Suche von beiden Seiten bzw. Abschnitten aus gestartet wird.

Beim vorigen Beispiel gemäß Figur 7 können durch Starten der Suche von der anderen Seite des Schalters die notwendigen parallelen Pfade gefunden werden. Wird die Anlage wie in Figur 8 aber größer und ist eine Längstrennung vorhanden, so stößt man damit auch an die Grenzen: die Suche muss ausgehend von den Sammelschienen starten. Weiterhin muss die längsgekuppelte Sammelschiene als ein Knoten betrachtet werden, so dass die notwendigen Pfade identifiziert werden können.

## Patentansprüche

1. Verfahren zur automatischen Parametrierung von Feldleitgeräten (100,101,102,103) und/oder Schutzgeräten einer Schaltanordnung (1,20,30,90,31,32,33), **gekennzeichnet durch** die Schritte:
- automatisches Erkennen der Topologie der Schaltanordnung (1,20,30,90,31,32,33) anhand einer Topologieinformation, und automatisches Ermitteln von Verriegelungs- und/oder Freigabebedingungen für mindestens ein Gerät (100,101,102,103) anhand der Topologie,
- Automatisches Angeben von Kommunikationsverbindungen (95,110) für das mindestens eine Gerät (100,101,102,103) unter Berücksichtigung der für dieses Gerät ermittelten Verriegelungs- und/oder Freigabebedingungen,
- Parametrieren des mindestens einen Geräts (100,101,102,103) mit den für dieses Gerät ermittelten Verriegelungs- und/oder Freigabebedingungen und den Kommunikationsverbindungen (95,110) und der Topologie, so dass im Betrieb der Schaltanordnung (1,20,30,90,31,32,33) eine Verriegelung oder Freigabe einer Schalthandlung unter Berücksichtigung der Schaltstellungen anderer Geräte in dem mindestens einen Gerät (100,101,102,103) steuerbar ist.

2. Verfahren nach Anspruch 1, **dadurch gekennzeichnet, dass** die Schaltanordnung (1,20,30,90,31,32,33) Teil eines elektrischen Versorgungsnetzes ist und als Topologieinformation ein Ein-Linien-Diagramm der Verschaltung von Sammelschienen (2,3,801,802,803), Feldern (L,S,91,92,93,94,804,805), Netzgruppen, Leistungsschaltern
(5,8,11,13,35,39,43,46,50,54,57,61,65), Trennschaltern (4,7,10,6,9,12,34,36,38,40,52,44,45,47,49,51,53,55,56,58,60,6 2,64,66), Feldleitgeräten (100,101,102,103) und/oder Schutzgeräten verwendet wird.

3. Verfahren nach Anspruch 1 oder 2, **dadurch gekennzeichnet, dass** für das Ermitteln von Verriegelungs- und/oder Freigabebedingungen sicherheitsrelevante Verriegelungs- und/oder Freigabebedingungen und betriebsbedingte Verriegelungs- und/oder Freigabebedingungen berücksichtigt werden.

4. Verfahren nach Anspruch 3, **dadurch gekennzeichnet, dass** betriebsbedingte Verriegelungs- und/oder Freigabebedingungen anhand einer vorgegebenen Betriebsphilosophie automatisch parametriert werden.

5. Verfahren nach einem der vorhergehenden Ansprüche, **dadurch gekennzeichnet, dass** die Topologieinformation mittels eines Suchverfahrens erkannt wird, bei dem mit einer gefundenen Sammelschiene und/oder einem Sammelschienenabschnitt elektrisch leitend verbundene Sammelschienen und/oder Sammelschienenabschnitten als ein zuhängender Knoten betrachtet werden.

6. Verfahren nach einem der vorhergehenden Ansprüche, **dadurch gekennzeichnet, dass** nur Kommunikationsverbindungen (95,110) parametriert werden, die für eine Übertragung von für das jeweilige Gerät (100,101,102,103) relevanten Informationen über Schalterstellungen von den jeweils anderen Geräten (100,101,102,103) benötigt werden, so dass die Datenkommunikation zwischen den Geräten (100,101,102,103) minimiert wird.

7. Verfahren nach einem der vorhergehenden Ansprüche, **dadurch gekennzeichnet, dass**
die ermittelten Verriegelungs- und/oder Freigabebedingungen in einer allgemeinen Konfigurationsdatei gespeichert werden, die Parameter der Feldleitgeräte (100,101,102,103) und/oder Schutzgeräte beinhaltet, und
jeweils Angaben über die für ein einzelnes Gerät (100,101,102,103) anhand der erkannten Topologie relevanten Verriegelungs- und/oder Freigabebedingungen und die für das jeweilige Gerät (100,101,102,103) parametrierten Kommunikationsverbindungen (95,110) und die Topologie in jeweils einer gerätespezifischen Konfigurationsdatei gespeichert werden, die an das jeweilige Gerät (100,101,102,103) übermittelt wird.

8. Verfahren nach Anspruch 7, **dadurch gekennzeichnet, dass** gemäß dem Standard IEC 61850-8-1 als allgemeine Konfigurationsdatei eine so genannte "system configuration description (SCD)" Datei und als spezifische Konfigurationsdateien so genannte "configured intelligent device description (CID)" Dateien verwendet werden, wobei die "configured intelligent device description (CID)" Dateien dem "Generic Object Oriented Substation Events (GOOSE)" Standard entsprechen.

9. Verfahren nach einem der vorhergehenden Ansprüche, **dadurch gekennzeichnet, dass** zusätzlich Spannungs- und Strommessgeräte der Schaltanordnung automatisch erkannt werden.

10. Anordnung zur automatischen Parametrierung von Feldleitgeräten (100,101,102,103) und/oder Schutzgeräten einer Schaltanordnung (1,20,30,90,31,32,33), **gekennzeichnet durch**:
eine Topologieerkennungseinrichtung für ein automatisches Erkennen der Topologie der Schaltanordnung (1,20,30,90, 31,32,33) anhand einer Topologieinformation, und
eine Auswerteeinrichtung für ein automatisches Ermitteln von Verriegelungs- und/oder Freigabebedingungen für mindestens ein Gerät (100,101,102,103) anhand der Topologie,
eine Parametiereinrichtung für ein automatisches Angeben von Kommunikationsverbindungen (95,110) für das mindestens eine Gerät (100,101,102,103) unter Berücksichtigung der für dieses Gerät (100,101,102,103) ermittelten Verriegelungs- und/oder Freigabebedingungen, und
eine Kommunikationseinrichtung, so dass das mindestens eine Gerät (100,101,102,103) mit den für dieses Gerät (100,101,102,103) ermittelten Verriegelungs- und/oder Freigabebedingungen und den Kommunikationsverbindungen (95,110) und der Topologie parametrierbar ist, wodurch im Betrieb der Schaltanordnung (1,20,30,90,31,32,33) eine Verriegelung oder Freigabe einer Schalthandlung unter Berücksichtigung der Schaltstellungen anderer Geräte in dem mindestens einen Gerät (100,101,102,103) steuerbar ist.

11. Anordnung nach Anspruch 10, **dadurch gekennzeichnet, dass** die Schaltanordnung (1,20,30,90,31,32,33) Teil eines elektrischen Versorgungsnetzes ist und die Topologieinformation ein Ein-Linien-Diagramm der Verschaltung von Sammelschienen (2,3,801,802,803), Feldern (L,S,91,92,93,94,804,805), Netzgruppen, Leistungsschaltern
(5,8,11,13,35,39,43,46,50,54,57,61,65), Trennschaltern (4,7,10,6,9,12,34,36,38,40,52,44,45,47,49,51,53,55,56,58,60,6 2,64,66), Feldleitgeräten (100,101,102,103) und/oder Schutzgeräten umfasst.

12. Anordnung nach Anspruch 10 oder 11, **dadurch gekennzeichnet, dass** die Auswerteeinrichtung geeignet ist, für das Ermitteln von Verriegelungs- und/oder Freigabebedingungen sicherheitsrelevante Verriegelungs- und/oder Freigabebedingungen und betriebsbedingte Verriegelungs- und/oder Freigabebedingungen zu berücksichtigen.

13. Anordnung nach einem der Ansprüche 10 bis 12, **dadurch gekennzeichnet, dass** die Auswerteeinrichtung geeignet ist, betriebsbedingte Verriegelungs- und/oder Freigabebedingungen anhand einer vorgegebenen Betriebsphilosophie automatisch zu parametrieren.

14. Anordnung nach einem der Ansprüche 10 bis 13, **dadurch gekennzeichnet, dass** die Topologieerkennungseinrichtung geeignet ist, die Topologieinformation mittels eines Suchverfahrens zu erkennen, bei dem mit einer gefundenen Sammelschiene und/oder einem Sammelschienenabschnitt elektrisch leitend verbundene Sammelschienen und/oder Sammelschienenabschnitten als ein zuhängender Knoten betrachtet werden.

15. Anordnung nach einem der Ansprüche 10 bis 14, **dadurch gekennzeichnet, dass** die Parametiereinrichtung geeignet ist, nur Kommunikationsverbindungen (95,110) zu parametrieren, die für eine Übertragung von für das jeweilige Gerät (100,101,102,103) relevanten Informationen über Schalterstellungen von den jeweils anderen Geräten (100,101,102,103) benötigt werden, so dass die Datenkommunikation zwischen den Geräten (100,101,102,103) minimiert wird.

## Claims

1. Method for the automatic parameterization of bay controllers (100, 101, 102, 103) and/or protective devices of a switching arrangement (1, 20, 30, 90, 31, 32, 33), **characterized by** the steps of:
- automatically detecting the topology of the switching arrangement (1, 20, 30, 90, 31, 32, 33) on the basis of topology information, and automatically determining interlocking and/or enabling conditions for at least one device (100, 101, 102, 103) on the basis of the topology,
- automatically specifying communication connections (95, 110) for the at least one device (100, 101, 102, 103) while taking into account the interlocking and/or enabling conditions determined for this device,
- parameterizing the at least one device (100, 101, 102, 103) with the interlocking and/or enabling conditions and the communication connections (95, 110) and the topology determined for this device, so that interlocking or enabling of a switching action while taking into account the switching positions of other devices in the at least one device (100, 101, 102, 103) is controllable during the operation of the switching arrangement (1, 20, 30, 90, 31, 32, 33).

2. Method according to Claim 1, **characterized in that** the switching arrangement (1, 20, 30, 90, 31, 32, 33) is part of an electrical supply system and a single-line diagram of the interconnection of busbars (2, 3, 801, 802, 803), bays (L, S, 91, 92, 93, 94, 804, 805), power system groups, power circuit breakers (5, 8, 11, 13, 35, 39, 43, 46, 50, 54, 57, 61, 65), disconnectors (4, 7, 10, 6, 9, 12, 34, 36, 38, 40, 52, 44, 45, 47, 49, 51, 53, 55, 56, 58, 60, 62, 64, 66), bay controllers (100, 101, 102, 103) and/or protective devices is used as topology information.

3. Method according to Claim 1 or 2, **characterized in that** safety-related interlocking and/or enabling conditions and operationally dependent interlocking and/or enabling conditions are taken into account for the determination of interlocking and/or enabling conditions.

4. Method according to Claim 3, **characterized in that** operationally dependent interlocking and/or enabling conditions are parameterized automatically on the basis of a prescribed operating philosophy.

5. Method according to one of the preceding claims, **characterized in that** the topology information is detected by means of a search method, in which busbars and/or busbar portions that are connected in an electrically conducting manner to a found busbar and/or a busbar portion are regarded as a contiguous node.

6. Method according to one of the preceding claims, **characterized in that** only communication connections (95, 110) that are required for a transmission of information relevant to the respective device (100, 101, 102, 103) concerning switch positions of the other devices (100, 101, 102, 103), respectively, are parameterized, so that the data communication between the devices (100, 101, 102, 103) is minimized.

7. Method according to one of the preceding claims, **characterized in that**
the determined interlocking and/or enabling conditions are stored in a general configuration file, which contains parameters of the bay controllers (100, 101, 102, 103) and/or protective devices, and
in each case details specifying the interlocking and/or enabling conditions that are relevant for an individual device (100, 101, 102, 103) on the basis of the detected topology and the communication connections (95, 110) that are parameterized for the respective device (100, 101, 102, 103) and the topology are stored in each case in a device-specific configuration file, which is transmitted to the respective device (100, 101, 102, 103).

8. Method according to Claim 7, **characterized in that** in accordance with the IEC standard 61850-8-1 a so-called "system configuration description (SCD)" file is used as a general configuration file and so-called "configured intelligent device description (CID)" files are used as specific configuration files, the "configured intelligent device description (CID)" files corresponding to the "Generic Object Oriented Substation Events (GOOSE)" standard.

9. Method according to one of the preceding claims, **characterized in that** voltage and current meters of the switching arrangement are additionally detected automatically.

10. Arrangement for the automatic parameterization of bay controllers (100, 101, 102, 103) and/or protective devices of a switching arrangement (1, 20, 30, 90, 31, 32, 33), **characterized by**:
a topology detection device for automatically detecting the topology of the switching arrangement (1, 20, 30, 90, 31, 32, 33) on the basis of topology information, and
an evaluation device for automatically determining interlocking and/or enabling conditions for at least one device (100, 101, 102, 103) on the basis of the topology, a parameterizing device for automatically specifying communication connections (95, 110) for the at least one device (100, 101, 102, 103) while taking into account the interlocking and/or enabling conditions determined for this device (100, 101, 102, 103), and
a communication device, so that the at least one device (100, 101, 102, 103) can be parameterized with the interlocking and/or enabling conditions and the communication connections (95, 110) and the topology determined for this device (100, 101, 102, 103), whereby interlocking or enabling of a switching action while taking into account the switching positions of other devices in the at least one device (100, 101, 102, 103) is controllable during the operation of the switching arrangement (1, 20, 30, 90, 31, 32, 33).

11. Arrangement according to Claim 10, **characterized in that** the switching arrangement (1, 20, 30, 90, 31, 32, 33) is part of an electrical supply system and the topology information comprises a single-line diagram of the interconnection of busbars (2, 3, 801, 802, 803), bays (L, S, 91, 92, 93, 94, 804, 805), power system groups, power circuit breakers (5, 8, 11, 13, 35, 39, 43, 46, 50, 54, 57, 61, 65), disconnectors (4, 7, 10, 6, 9, 12, 34, 36, 38, 40, 52, 44, 45, 47, 49, 51, 53, 55, 56, 58, 60, 62, 64, 66), bay controllers (100, 101, 102, 103) and/or protective devices.

12. Arrangement according to Claim 10 or 11, **characterized in that** the evaluation device is suitable for taking into account safety-related interlocking and/or enabling conditions and operationally dependent interlocking and/or enabling conditions for the determination of interlocking and/or enabling conditions.

13. Arrangement according to one of Claims 10 to 12, **characterized in that** the evaluation device is suitable for parameterizing operationally dependent interlocking and/or enabling conditions automatically on the basis of a prescribed operating philosophy.

14. Arrangement according to one of Claims 10 to 13, **characterized in that** the topology detection device is suitable for detecting the topology information by means of a search method, in which busbars and/or busbar portions that are connected in an electrically conducting manner to a found busbar and/or a busbar portion are regarded as a contiguous node.

15. Arrangement according to one of Claims 10 to 14, **characterized in that** the parameterizing device is suitable for parameterizing only communication connections (95, 110) that are required for a transmission of information relevant to the respective device (100, 101, 102, 103) concerning switch positions of the other devices (100, 101, 102, 103), respectively, so that the data communication between the devices (100, 101, 102, 103) is minimized.

## Revendications

1. Procédé de paramétrage automatique d'appareils (100, 101, 102, 103) de commande sur site et/ou d'appareils de protection d'un système (1, 20, 30, 90, 31, 32, 33) de coupure, **caractérisé par** les stades :
- reconnaissance automatique de la topologie de l'agencement (1, 20, 30, 90, 31, 32, 33) de coupure à l'aide d'une information et détermination automatique de conditions de verrouillage et/ou de validation pour au moins un appareil (100, 101, 102, 103) à l'aide de la topologie,
- indication automatique de liaisons (95, 110) de communication pour le au moins un appareil (100, 101, 102, 103), en tenant compte des conditions de verrouillage et/ou de validation déterminées pour cet appareil,
- Paramétrage du au moins un appareil (100, 101, 102, 103) par les conditions de verrouillage et/ou de validation déterminées pour cet appareil et les liaisons (95, 110) de communication et la topologie, de manière à ce que, lorsque le système (1, 20, 30, 90, 31, 32, 33) de coupure est en fonctionnement, un verrouillage ou une validation d'une manipulation de coupure puisse être commandé dans le au moins un appareil (100, 101, 102, 103), en tenant compte des positions de coupure d'autres appareils.

2. Procédé suivant la revendication 1, **caractérisé en ce que** le système (1, 20, 30, 90, 31, 32, 33) de coupure fait partie d'un réseau d'alimentation électrique et on utilise, comme information de topologie, un diagramme monolinéaire du câblage de barres (2, 3, 801, 802, 803) collectrices, de champs (L, S, 91, 92, 93, 94, 804, 805) de groupes de réseau, de disjoncteurs (5, 8, 11, 13, 35, 39, 43, 46, 50, 54, 57, 61, 65), de sectionneurs (4, 7, 10, 6, 9, 12, 34, 36, 38, 40, 52, 44, 45, 47, 49, 51, 53, 55, 56, 58, 60, 62, 64, 66), d'appareils (100, 101, 102, 103) de commande sur site et/ou d'appareils de protection.

3. Procédé suivant la revendication 1 ou 2, **caractérisé en ce que**, pour la détermination de conditions de verrouillage et/ou de validation, on prend en compte des conditions de verrouillage et/ou de validation pertinentes du point de vue de la sécurité et des conditions de verrouillage et/ou de validation déterminées par le fonctionnement.

4. Procédé suivant la revendication 3, **caractérisé en ce que** l'on paramètrise automatiquement des conditions de verrouillage et/ou de validation déterminées par le fonctionnement à l'aide d'une philosophie de fonctionnement donnée à l'avance.

5. Procédé suivant l'une des revendications précédentes, **caractérisé en ce que** l'on reconnaît l'information de topologie au moyen d'un procédé de recherche, dans lequel on considère comme un nœud pendant des barres collectrices et/ou des tronçons de barres collectrices reliés d'une manière conductrice de l'électricité à une barre collectrice et/ou à un tronçon de barre collectrice trouvé.

6. Procédé suivant l'une des revendications précédentes, **caractérisé en ce que** l'on paramétrise seulement des liaisons (95, 110) de communication, qui sont nécessaires à une transmission d'informations pertinentes pour l'appareil (100, 101, 102, 103) respectif, par des position d'interrupteur des autres appareils (100, 101, 102, 103), de manière à minimiser la communication de données entre les appareils (100, 101, 102, 103).

7. Procédé suivant l'une des revendications précédentes, **caractérisé en ce que**
l'on met les conditions de verrouillage et/ou de validation, qui ont été déterminées, en mémoire dans un fichier de configuration général, qui contient des paramètres des appareils (100, 101, 102, 103) de commande sur site et/ou des appareils de protection, et
on met en mémoire, dans, respectivement, un fichier de configuration spécifique à un appareil, respectivement, des indications sur les conditions de verrouillage et/ou de validation pertinentes, à l'aide de la topologie reconnue pour un appareil (100, 101, 102, 103) individuel, et sur la topologie, fichier que l'on transmet à l'appareil (100, 101, 102, 103) respectif.

8. Procédé suivant la revendication 7, **caractérisé en ce que** l'on utilise, suivant la norme IEC 61850-8-1, comme fichier de configuration général, un fichier dénommé « system configuration description (SCD) » et comme fichiers de configuration spécifiques, des fichiers dénommés « configured intelligent device description (CID) » les fichiers « configured intelligent device description (CID) » correspondant à la norme « generic object oriented substation events (GOOSE) ».

9. Procédé suivant l'une des revendications précédentes, **caractérisé en ce que** l'on reconnaît automatique, en outre, des appareils de mesure de tension et de courant du système de coupure.

10. Système de paramétrage automatique d'appareils (100, 101, 102, 103) de commande sur site et/ou d'appareils de protection d'un système (1, 20, 30, 90, 31, 32, 33) de coupure, **caractérisé par** :
un dispositif de reconnaissance de la topologie pour une reconnaissance automatique de la topologie du système (1, 20, 30, 90, 31, 32, 33) de coupure à l'aide d'une information de topologie, et
un dispositif d'exploitation pour une détermination automatique de conditions de verrouillage et/ou de validation d'au moins un appareil (100, 101, 102, 103) à l'aide de la topologie,
un dispositif de paramétrage pour une indication automatique de liaisons (95, 110) de communication pour le au moins un appareil (100, 101, 102, 103), en tenant compte des conditions de verrouillage et/ou de validation, qui ont été déterminées pour cet appareil (100, 101, 102, 103), et
un dispositif de communication, de manière à ce que le au moins un appareil (100, 101, 102, 103) puisse être paramétré par les conditions de verrouillage et/ou de validation, qui ont été déterminées pour cet appareil (100, 101, 102, 103) et par les liaison (95, 110) de communication et par la topologie, grâce à quoi, lorsque le système (1, 20, 30, 90, 31, 32, 33) de coupure est en fonctionnement, un verrouillage ou une validation d'une manipulation de coupure peut être commandé dans le au moins un appareil (100, 101, 102, 103), en tenant compte des positions de coupure d'autres appareils.

11. Système suivant la revendication 10, **caractérisé en ce que** l'agencement (1, 20, 30, 90, 31, 32, 33) de coupure fait partie d'un réseau d'alimentation électrique et l'information de topologie comprend un diagramme monolinéaire du câblage de barres (2, 3, 801, 802, 803) collectrices, de champs (L, S, 91, 92, 93, 94, 804, 805), de groupes de réseau, de disjoncteurs (5, 8, 11, 13, 35, 39, 43, 46, 50, 54, 57, 61, 65), de sectionneurs (4, 7, 10, 6, 9, 12, 34, 36, 38, 40, 52, 44, 45, 47, 49, 51, 53, 55, 56, 58, 60, 62, 64, 66), d'appareils (100, 101, 102, 103) de commande sur site et/ou d'appareils de protection.

12. Système suivant la revendication 10 ou 11, **caractérisé en ce que** le dispositif d'exploitation est propre à tenir compte, pour la détermination de conditions de verrouillage et/ou de validation, de conditions de verrouillage et/ou de validation pertinentes du point de vue de la sécurité et de conditions de verrouillage et/ou de validation déterminées par le fonctionnement.

13. Système suivant l'une des revendications 10 à 12, **caractérisé en ce que** le dispositif d'exploitation est propre à paramétrer automatiquement, à l'aide d'une philosophie de fonctionnement donnée à l'avance, des conditions de verrouillage et/ou de validation déterminées par le fonctionnement.

14. Système suivant l'une des revendications 10 à 13, **caractérisé en ce que** le dispositif de reconnaissance de la topologie est propre à reconnaître l'information de topologie, au moyen d'un procédé de recherche, dans lequel on considère comme un nœud pendant des barres collectrices et/ou des tronçons de barres collectrices reliés d'une manière conductrice de l'électricité à une barre collectrice et/ou à un tronçon de barres collectrice trouvé.

15. Système suivant l'une des revendications 10 à 14, **caractérisé en ce que** le dispositif de paramétrage est propre à ne paramétrer que les liaisons (95, 110) de communication, qui sont nécessaires à une transmission d'informations pertinentes pour l'appareil (100, 101, 102, 103) respectif, par des position de commutateur des autres appareils (100, 101, 102, 103), de manière à minimiser la communication de données entre les appareils (100, 101, 102, 103).
